# EUROPEAN PATENT APPLICATION

(11) **EP 1 050 569 A1**
(43) Date of publication of application: **08.11.2000**
(21) Application number: 99870097.5
(22) Date of filing: 06.05.1999
(51) Int. Cl.: C09K 5/10, F01P 3/00

(54) **Liquid coolant for internal combustion engines**

(71) Applicant: Vandeputte, Filip, 2970 Schilde (BE)
(72) Inventor: Vandeputte, Filip, 2970 Schilde (BE)
(74) Representative: Luys, Marie-José A.H.

(57) **Abstract**

The present invention relates to an internal combustion engine comprising a liquid cooling system for cooling the engine, which cooling system comprises a cooling circuit for circulating a cooling liquid through the cooling system, wherein the cooling liquid use is chosen from the group of mineral oils, organic silicone compounds, liquid silicates and halogenated biphenyls. The present invention also relates to a co-generation device comprising the above described internal combustion engine. The abstract refers to figure 2.

## Description

The present invention relates to an internal combustion engine comprising a liquid cooling system for cooling the engine, which cooling system comprises a cooling circuit for circulating a cooling liquid through the cooling system.

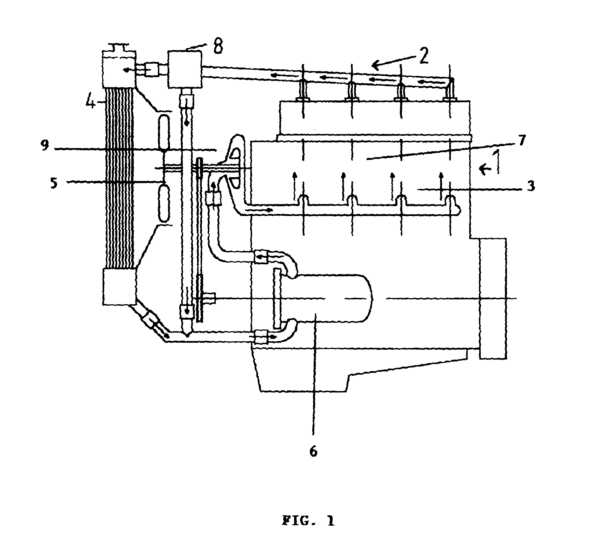

In internal combustion engines, a fuel mixture is brought to explosion to generate energy. Thereby, part of the energy is generated as heat. To avoid malfunctioning of the engine through over heating of the engine, the engine is provided with a cooling system. Thereto, a liquid coolant is circulated in a closed system, through passages provided in the engine, so as to allow an indirect contact of the cooling liquid with a.o. the combustion chamber, the cylinder walls, valve seats and guides. As is shown in figure 1, the cooling system comprises a radiator which is connected to a water pump for drawing liquid coolant from the bottom of the radiator and pushing the withdrawn coolant through the engine block to cool the cylinders. The thus pre-heated coolant is pushed to the engine heads to cool them and thereafter passed through the intake manifold towards the thermostat. The thermostat in fact controls the engine temperature by controlling the amount of hot coolant that is circulated back to and out of the radiator. In the radiator, the coolant is cooled through the large contact surface area of the radiator with the environment. The radiator is provided with a fan so as to improve the cooling of the coolant.

In liquid cooling systems, usually water is used as the cooling liquid because of its high heat capacity and heat conduction properties. However, in critical situations when the engine temperature is running high and extensive cooling is needed, the water cooling system shows undesired deficiencies. At high temperatures above 100°C, steam bubbles may be generated. As a result thereof, the cooling medium will no longer be water, but a mixture of water and steam.

To solve the problem of the undesired steam bubble formation, a vast number of solutions modifying the cooling system, have been suggested. In one of the suggested solutions, water is pulled from the radiator into the water pump, metering it past the thermostat, where recycled warm coolant can be mixed in to keep the engine temperature constant. The coolant is pumped directly into the heads so as to allow them to run at a lower temperature and decreasing the risk to knocking of the engine. Trapped steam is allowed to escape through vent lines provided in the back of the heads that are plumbed to the reservoir. The heated coolant leaving the heads is pushed from the heads down, past the cylinders, back to the thermostat housing in the water pump, where it is then pushed into the radiator. However, this known cooling system still shows an unsatisfactory cooling of the motor because steam bubbles can still be formed.

It is the aim of the present invention to provide an improved liquid cooling system, with which the large variations in the cooling capacity can be avoided.

This is achieved according to the present invention in that as a cooling liquid, use is made of a liquid chosen from the group of mineral oils, organic silicone compounds, liquid silicates and halogenated biphenyls. Those liquids in general have a boiling point which is substantially above the boiling point of water i.e. 100°C, for example 200-300°C, at least for those liquids the boiling point of which is below their decomposition temperature.

The man skilled in the art faced with the problem of having to choose an efficient liquid coolant, will most often select water because of its high heat capacity and heat conductivity. Because of its high heat capacity (about 4049 kJ/m³), water is capable of absorbing a large amount of heat Because of its high heat conductivity (about 0.681 W/m°K), water is capable of easily exchanging the absorbed heat with the environment. However, an analysis of the problem of steam bubble formation has revealed that in critical situations, for example in summer when the environmental temperature is raising high, the temperature of the walls of the cylinder heads may raise above the boiling temperature of water, giving rise to the formation of steam in the cooling circuit. In that case, the cooling medium will no longer be water, but rather a mixture of steam and water which has completely different properties of heat capacity and heat conductivity, than liquid water. The inventor has found that if only 0.02 wt. % of the cooling water is evaporated to steam, the heat capacity per volume unit of the cooling medium decreases with about 25%. Steam namely has a heat capacity of only 0.834 kJ/m³.

By making use of the liquid coolants enumerated in the characterising part of claim 1, which have a boiling temperature of at least the temperature of the external walls of the cylinder heads of the engine, the risk to the above described formation of a vapour phase, in particular in critical situations, can be minimised. By making use of the liquid coolants enumerated in the characterising part of claim 1, in fact overheating of the engine can be avoided.

However, because the above mentioned liquid coolants have a lower heat capacity than water, use thereof as a coolant will result in a reduced absorption of the engine heat and an increase of the over all engine temperature. The man skilled in the art would thus never consider using those liquids as a coolant. The inventor has now found that the enumerated liquids provide a self regulating system, which is capable of handling temporary increases of the temperature within the combustion concept of the engine, which with water would lead to a fall out of the cooling. An engine is namely designed to run at a pre-determined operating temperature, so as to provide an optimum capacity and efficiency. This optimal temperature must not necessarily correspond to a temperature of the external wall of the cylinder heads of approximately 100°C, but can be higher. The cooling liquid thus needs not to be capable of cooling the engine to a temperature of 100°C, but rather to the optimal operating temperature of the engine, which may very well be over 100°C. Thereby, it is not important that the temperature of the cooling liquid may raise above 100°C, as long as the coolant is capable of cooling the engine within its optimum operating temperature range.

The enumerated cooling liquids present the further advantage that they allow to decrease the mechanical wear of the engine. When starting the engine, the engine parts are temporarily devoid of lubrication because of the high viscosity of the engine oil when the engine is cold. Because the above enumerated liquids have a lower heat capacity than water, the time needed for heating the engine after a cold start to a temperature at which the oil shows its lubrication properties, can be decreased.

In the internal combustion engine of this invention, preferably use is made of a mineral oil as a coolant. Since as a lubricant for the engine also mostly mineral oils are used, the coolant can be removed and recycled together with the engine oil. In that way also the risk that leaks in the engine system, which otherwise would result in the engine lubricant being mixed with the cooling water thus deteriorating the lubrication of the engine, adversely affect the functioning of the engine.

The inventor has also found that by providing the internal combustion engine system with means for adapting the flow rate of the liquid coolant, the cooling capacity of the liquid can be increased, thus allowing the cooling capacity of water to be approached. By providing means for adapting the flow rate of the cooling liquid, the engine can moreover be cooled to its optimum operating temperature. In case a more extensive cooling of the engine is needed, this can be achieved with the present invention by adapting the flow rate of the liquid coolant.

Furthermore, the cooling system comprises a number of pipes for circulating the coolant there through. By adapting the size of the pipes to the desired extent of cooling, the cooling can be further improved.

The present invention also relates to a co-generation device for a simultaneous generation of electricity and heat.

From the art, high capacity co-generation devices are known which comprise a gas turbine for generating electricity on a large scale. Those large scale co-generation devices are mostly located at a central location, from which electricity is distributed to one or more decentralised users. Approximately 70% of the energy produced upon the combustion of gas is released as heat, through the exhaust gasses (major part) and the engine jacket water heat exchanger (minor part). From the art also multi cylinder gas engines are known for generating electricity on a limited scale, which are located as close to the consumer as possible. Approximately 70% of the energy produced upon the combustion of gas is released as heat through the engine jacket water heat exchanger (major part) and through the exhaust gasses (minor part). Because the temperature of the engine jacket water heat exchanger is limited to approximately 100°C, this heat can only be used in low temperature applications, such as for example for the heating of swimming pools, greenhouses, the heating of buildings. As electricity cannot be accumulated and stored, the consumption of the electricity and the thereby released heat must take place simultaneously, at the risk of loosing efficiency.

It is the aim of the present invention to provide a co-generation device wherein efficient use can be made of the thermal energy contained in the cooling liquid of the engine.

This is achieved with the present invention in that a co-generation device is provided, which co-generation device comprises an internal combustion engine provided with a cooling system for cooling the engine, wherein as a coolant use is made of a cooling liquid chosen from the group of mineral oils, organic silicone compounds, liquid silicates and halogenated biphenyls, which cooling system is connected to a heat recuperation device.

With the co-generation device of the present invention, electricity can be generated on a more local basis, thus avoiding the necessity of transporting and distributing electrical energy from a general production site to the end users.

As the cooling liquids used in the co-generation device of this invention have a boiling point far above 100°C, the temperature within the cooling system may raise above 130°C or more, without thereby involving the risk to the formation of a vapour phase and a local fall out of the cooling system.

Whereas cooling water with a temperature of approximately 100°C has a limited number of industrial applications, efficient use can be made of the heat contained or stored in a cooling liquid which has a temperature of 130°C or more. At those temperatures namely the cooling liquid becomes suitable for use in high temperature applications such as for example food cooking applications, vulcanisation of rubber, laundry washing, melting of asphalt, chemical processes etc., since the temperature of the coolant is high enough to compensate possible heat losses occurring during transport of the coolant or transfer of the heat contained in the coolant to another medium. A coolant at a temperature of 130°C or more namely allows steam to be generated. Steam has the advantage that it is a self regulating system, i.e. that by adjusting the steam pressure, its temperature can be controlled and vice versa. In that way the waste heat contained in the cooling circuit of the engine may be further used for applications at higher temperatures above 100°C, such as in the examples given here above. This means in fact that heat can be generated and stored locally, which allows to save not only on transport costs but also on investment costs.

With the present invention, thus a system is provided wherein electricity can be generated on a local basis, and whereby simultaneously efficient use can be made of the thereby generated heat that would otherwise be wasted.

In the co-generation device of the present invention, preferably means are provided for controlling the capacity of the internal combustion engine. When use is made of the above described cooling liquids, it is possible that the temperature of the engine raises somewhat to approximately 130°C. It has now been found that for internal combustion engines, a temperature of approximately 130°C is a very good operating temperature. In situations where a high output of the engine is demanded, the temperature of the engine walls may raise to higher temperatures, so that a more extensive cooling of the engine may be needed in order to keep the engine in thermal equilibrium.

In the co-generation device of the present invention, preferably means are provided for controlling the flow rate of the cooling liquid so as to provide an optimum temperature control of the engine.

The cooling system of te co-generation device of this invention may be contacted with a water reservoir so as to function as a heat exchanger and heat large volumes of water for example for heating applications. It is further possible to contact the cooling system with a water reservoir of a steam generator so as to generate steam.

The invention is further illustrated in the attached figure and description of the figure.

Figure 1 shows a cross section of the internal combustion engine of this invention.

Figure 2 shows a cross section of a co-generation device of this invention.

The device shown in figure 1 comprises an internal combustion engine 1, with a cooling system 2 for cooling the walls of the internal combustion engine block 1. The cooling system 2 comprises a jacket 3 through which the coolant is circulated, so as to allow an indirect contact of the coolant with the combustion chambers 7, the cylinder walls and the valve seats and guides of the engine 1. As a coolant use is made of a liquid with a boiling temperature above 100°C, preferably above 130°C, for example chosen from the group mineral oils, organic silicone compounds, liquid silicates and halogenated biphenyls. Preferably use is made of a mineral oil so as to allow the engine oil and the liquid coolant-to be exchanged and dumped together. Examples of mineral oils that are suitable for use with the present invention include the so called heat transfer oils, for example Mobiltherm® 594, which is a naphtalene distillate treated with hydrogen, and Therminol ® D-12 Heat Transfer Fluid from Monsanto.

The cooling system 2 comprises a circulation pump 9 for circulating the coolant from the engine block 1 whore it is heated, towards a thermostat 8. The thermostat 8 controls the engine temperature by controlling the amount of hot coolant that is circulated to and out of the radiator 4. In the radiator 4 a large contact surface area with the environment is provided so as to allow the coolant to be sufficiently cooled. A fan 5 may be provided at the radiator so as to improve the cooling of the coolant. From the radiator 4, the coolant is circulated back to the engine. Thereby, the coolant may be circulated through a device 6 for cooling the engine oil.

In the device of this invention, preferably means are provided for adjusting the circulation rate of the circulation pump 9, and thus the circulation rate of the coolant, so as to allow an improved control of the engine temperature. Also, in order to increase the cooling rate of the coolant, the size of the pipes through which the coolant is circulated may be enlarged, so as to allow a higher flow rate of the coolant. The engine 1 may be coupled to a device for controlling the capacity, so as to allow the engine to be run at a lower capacity and avoid overheating of te engine.

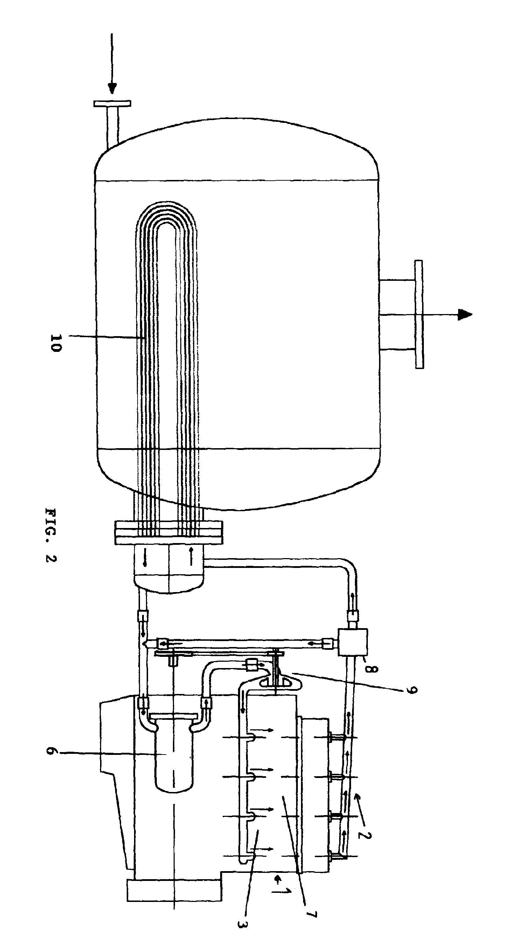

In the co-generation application shown in figure 2, the radiator 4 of figure 1 has been removed and has been replaced by a heat exchanger 10, which may be used for heating applications. Thereto, the heat exchanger may contain a number of pipes 9 that are contacted with for example large volumes of water for heating applications for example for buildings or green houses, swimming pools etc. The cooling system 2 can also be used for heating water in a steam generator for generating steam, which in turn may be used in other industrial applications.

## Claims

1. Internal combustion engine comprising a liquid cooling system for cooling the engine, which cooling system comprises a cooling circuit for circulating a cooling liquid through the cooling system, characterised in that the cooling liquid is chosen from the group of mineral oils, organic silicone compounds, liquid silicates and halogenated biphenyls.

2. Internal combustion engine as claimed in claim 1, characterised in that the cooling liquid is a mineral oil.

3. Internal combustion engine as claimed in claim 1 or 2, characterised in that the internal combustion engine comprises means for adjusting the flow rate of the liquid coolant.

4. Internal combustion engine as claimed in any one of claims 1-3, characterised in that the internal combustion engine comprises means for controlling the capacity of the engine.

5. Co-generation device comprising an internal combustion engine with a cooling system for cooling the engine, which cooling system comprises a cooling circuit for circulating a cooling liquid through the cooling system, whereby the cooling liquid is chosen from the group of mineral oils, organic silicone compounds, liquid silicates and halogenated biphenyls, which cooling system is connected to a heat recuperation device.

6. Co-generation device as claimed in claim 5, characterised in that the co-generation device comprises means for controlling the capacity of the internal combustion engine.

7. Co-generation device as claimed in claim 5 or 6, characterised in that cooling system is coupled to a steam generator.

8. Co-generation device as claimed in claim 5 or 6, characterised in that the cooling system is coupled to a heat exchanger.

9. Co-generation device as claimed in any one of claims 5 to 8, characterised in that when the device is in use, the temperature of the cooling liquid is at least 130°C.
